Europäisches Patentamt

European Patent Office

Office européen des brevets

(19)

(11) EP 1 462 765 A2

(12) EUROPEAN PATENT APPLICATION

(43) Date of publication:
29.09.2004 Bulletin 2004/40

(51) Int Cl.⁷: G01C 21/00, G09B 9/00

(21) Application number: 04075522.5

(22) Date of filing: 19.02.2004

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 28.03.2003 SE 0300890

(71) Applicant: SAAB AB
581 88 Linköping (SE)

(72) Inventors:
• Bergman, Johan
  554 48 Jönköping (SE)
• Holmquist, Anders
  554 48 Jönköping (SE)
• Andersson, Cristian
  568 32 Skillingaryd (SE)
• Modèn, Anders
  57192 Nässjö (SE)

(54) **Device and method for displaying the position and movement of objects**

(57)     The present invention concerns a presentation surface (1) for displaying the movements of at least one object within a chosen environment during a given time interval. The presentation surface (1) comprises a depiction (2) of said environment and, for each respective object, a track (5, 6) of the positional movements of the object in the environment within a given time interval. The conformation of the track (5, 6) is a function of time during the given time interval. The invention also concerns a method for indicating a sequence of events on a presentation surface (1), and a device for displaying one or more movable objects in a representation of the environment in connection with equipment for training for total defense missions.

Fig 1

**Description**

TECHNICAL AREA

The present invention concerns a presentation surface for displaying the movements of at least one object within a chosen environment during a given time interval in accordance with the preamble to claim 1.

The present invention also concerns a method for indicating a sequence of events on the presentation surface in accordance with the preamble to claim 8.

The present invention also concerns a device for displaying one or more moving objects in connection with equipment for training for total defense missions in accordance with the preamble to claim 13.

STATE OF THE ART

Training systems currently exist in which military situations can be run as exercises and evaluated. In such exercises the participating objects, such as soldiers, vehicles, etc. carry equipment for storing or transferring information. This information includes events of various types, such as information that the object is being fired upon or is giving fire, as well as continuous position information. This information is received during or after the exercise in a presentation unit that is used to evaluate the exercise. The evaluation can occur after an exercise or during an ongoing exercise. For example, static reports can be generated to present the results of the exercise in the form of numbers of dead/wounded, the effects of various weapons, etc. Furthermore, information relevant to a given participating group can be processed and presented so that the participants in the group can study how they moved during the exercise, and what events occurred. This feedback is a very important tool for groups who must be able to evaluate their actions during the exercise. The presentation is generally realized in that the ways in which the group moved during the exercise and the ways in which other friendly and/or hostile objects were positioned/moved about are indicated on a cartographic image of the exercise area. Tracks on the cartographic image are, for example, represented as curves. In addition, events can be marked out on the cartographic image, e.g. positions from which shots were fired, positions where objects were hit by fire, etc.

One problem with these presentations for evaluating exercises is that movements and events are indicated, but the presentation does not clearly reveal the time sequence of the events and movements, or the relationships between the objects. One object of the present invention is thus to provide a presentation that reveals how the objects moved about during the exercise, and links events to the objects as a function of time.

SPECIFICATION OF THE INVENTION

The present invention provides a presentation surface for displaying the movements of at least one object within a chosen environment during a given time interval, wherein the presentation surface comprises a depiction of said environment and, for each respective object, a track of the positional movements of the object in the environment within a given time interval, where the conformation of the track is a function of time during a given time interval. The conformation of the track according to the invention thus clarifies where and when a object was at rest or in motion, and also whether the object moved rapidly or slowly. In an embodiment involving more than one object, the locations of the objects in relation to one another at each time during the exercise are also made clear on the presentation surface.

The track is preferably a curve comprising all the earlier positions of the object within the environment. The curve can, for example, take the form of a solid line or a broken line.

In a preferred embodiment at least one visual property of the curve is time-dependent, whereupon the visual property at a given position along the curve is arranged so as to represent the time at which the object was located at that position in the environment. The visual property can consist of, e.g. the coloration of the curve at this position. However, other curve properties can also conceivably be time-dependent, such as the conformation of the curve line (thick/thin, broken with long/short segments, etc.) or the transparency of the curve line.

To further clarify situations and mutual distances between objects, the presentation surface can also include special symbols that represent the earlier positions of the objects along their respective tracks at chosen specific times. The time, which can fall within the interval from the start of the track to the end of the track, is set by a common time pointer for the chosen situation analysis. If the time pointer is moved, the special symbols will move synchronously along their respective tracks. The special symbols can have the same appearance as the ordinary ones, but they are given a unique property, e.g. semi-transparency, to denote an earlier situation.

The depiction can be a cartographic presentation, but it could also consist of, e.g. a photograph or a synthetic model of an environment.

The present invention also concerns a device for displaying one or more moving objects in connection with equipment for training for total defense missions in accordance with the preamble to claim 13, and a method for indicating a sequence of events on a presentation surface in accordance with claim 8.

BRIEF FIGURE DESCRIPTION

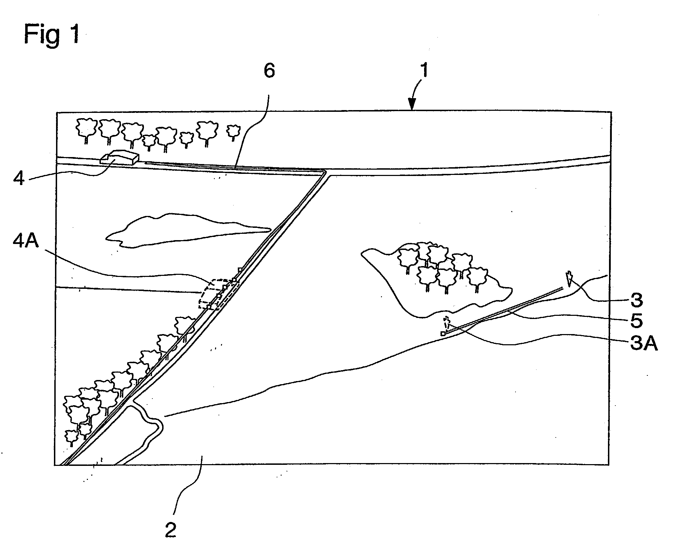

Fig. 1 Shows the presentation surface according to the invention with two objects.

PREFERRED EMBODIMENTS

Figure 1 shows a presentation surface 1 according to the invention comprising a representation/image 2 of an environment in the form of an aerial photograph. A known number of objects is present within this environment, and information concerning the positions of the objects, events relating to the objects and other information are stored first in the object before subsequently being transferred at regular intervals from the object to the presentation unit, or transferred directly from the object to the presentation unit. The presentation surface 1 makes it possible to create in this presentation unit an overview of objects whose information is collected in the central unit. Each respective object is presented as a symbol in the image 2 of the environment of the object. A first object in the image 2 consists of a soldier, who is represented by a first symbol 3. A vehicle constitutes a second object within the same environment. This vehicle is represented by a second symbol 4. The symbols 3, 4 are chosen in such a way that the respective objects can be clearly differentiated from one another. The presentation surface 1 shown in the figure is incorporated into equipment for military training. The presentation surface 1 can naturally also appear in other applications where there is a need for the ability to illustrate sequences of events for one or more objects in an environment.

Figure 1 shows how a first track 5 in connection with the first symbol 3 reproduces the movements of the first object in the environment during a given period of time. The placement of the first symbol 3 represents the position of the first object at the time when the time interval ended, or at the present time. In the preferred embodiment shown in the figure, the first track consists of a continuous curve emanating from the first symbol 3. In a corresponding manner, a second track 6 in connection with the second symbol 4 illustrates the movements of the second object in the environment. The second track 6 also consists, in the embodiment shown, of a continuous curve emanating from the second symbol.

Each track 5, 6 emanating from symbols 3 and 4, respectively, consists in the depicted embodiment of an incrementally parameterized function of the time:

$$L(t) = P(t_1) \times F_1(t) + P(t_0) \times F_2(t) \qquad (1)$$

where

$$t_0 = < t < = t_1$$

and

$$F_1(t) + F_2(t) = 1$$

Each curve segment extends between two events at times to and $t_1$, respectively, and with the position P(t) at times $t_0$ and $t_1$. $F_1(t)$ runs linearly from 0 to 1 for t, while $F_2(t)$ runs linearly from 1 to 0.

In the presentation shown in Figure 1, earlier positions and events are represented in chronological order by a continuous curve. The positions of the first and the second objects relative to one another at the end of the time interval are indicated by the positions of the symbols in relation to the background image. The positions at the starting time (to) can be read from the start of each respective curve, i.e. that part of the curve that is located farthest from its corresponding symbol. In the embodiment according to the invention, respective tracks 5, 6 are conformed in such a way that the movements of the objects relative to one another can be discerned from the different curves. In the embodiment shown, the coloration of the curved tracks 5, 6 can vary as a function of time during the time interval in which the movements occur. This means that curve segments having the same color tones represent the same period of time. In an alternative embodiment the tracks 5, 6 are semi-transparent, and the transparency increases or decreases as a function of time. The colors can be coded based on an arbitrary function C(t) [red, green, blue, alpha) depending on what one wishes to illustrate. If C(t) {alpha} is made time-dependent, then time-dependent transparency can be obtained.

In an alternative embodiment not shown in the figure, tracks 5, 6 can be realized in the form of broken curves where, e.g. the line thickness or distance between segments increases as a function of time during the given time interval. Other conformations of the tracks are of course also possible within the scope of the inventive concept.

To further improve the ability to evaluate an ongoing or earlier sequence of events in equipment for training for total defense missions, one or more markings 3a, 4a in the form of shadow depictions of symbols 3, 4, respectively are arranged in connection with the tracks 5, 6 at the time to which the time pointer is set. These markings 3a, 4a illustrate where along a given track the object was located at the specified time. A shadow depiction 4a of the second symbol is shown in the figure, which shadow depiction 4a corresponds to the position of the second object 4, i.e. the vehicle, at the same specified time. The first object/soldier then fired on the vehicle, and the vehicle recorded the fire. Smaller markers are shown along the track 6 to clarify the positions at which this fire was directed against the second object.

Route selection analysis can be facilitated by adding fictive tracks that represent the optimal or desirable routes of the objects on the surface on which the movements of the objects are being presented as tracks. This is of interest primarily in connection with methodological and procedural training.

If the properties of the depiction enable presentation in three dimensions, it is then also possible to display the movements of the objects and events in all three dimensions on the presentation surface. This can be of interest in terms of the ability to analyze situations and events in, e.g. buildings where separate stories need to be differentiated.

**Claims**

1. A presentation surface (1) for displaying the movements of at least one object within a chosen environment during a given time interval, wherein the presentation surface (1) comprises a depiction (2) of said environment and, for each respective object, a track (5, 6) of the positional movements of the object in the environment within a given time interval, **characterized in that** the conformation of the track (5, 6) is a function of time during the given time interval.

2. A presentation surface (1) according to claim 1, wherein the track (5, 6) is a curve comprising earlier positions of the object during the given time interval.

3. A presentation surface (1) according to claim 2, wherein at least one visual property of the curve at a given position along the curve is arranged so as to represent the time at which the object was located at that position in the environment.

4. A presentation surface (1) according to claim 3, wherein the visual property consists of the coloration of the curve at this position.

5. A presentation surface (1) according to claim 4, wherein the depiction is a cartographic presentation.

6. A presentation surface (1) according to claim 4, wherein the depiction is a photograph.

7. A presentation surface according to claim 4, wherein the depiction is a synthetic model.

8. A method for indicating a sequence of events on a presentation surface (1) for one or more movable objects within a chosen environment, for which objects one or more positions within a given time interval are displayed as a track (5, 6) in a depiction (2) of said environment on the presentation surface (1), **characterized in that** the time during the given time interval is represented by visually detectable properties of the track.

9. A method according to claim 8, wherein the color of the tracks (5, 6) changes as a function of time.

10. A method according to claim 8, wherein the transparency of the tracks (5, 6) changes as a function of time.

11. A method according to claim 8, wherein the position of the object at a specific time is represented by a shadow depiction (3a, 4a) along its curve.

12. A method according to claim 11, wherein the time for which the position of an object is analyzed is set by a time pointer, which time pointer can be set arbitrarily within the entire time interval, and wherein a change in the time pointer entails a synchronous movement of all presented objects along their respective tracks.

13. A device for displaying one or more moving objects in a representation of an environment in equipment for training for total defense missions, for which objects a track is arranged so as to represent the movements of each respective object during a given time interval, **characterized in that** the conformation of the track (5, 6) is a function of time during the given time interval.

14. A device according to claim 13, wherein each respective object is represented by a symbol (3, 4) and individual events along the tracks (5, 6) for each respective object are indicated as one or more separate markings in connection with the extension of the tracks (5, 6).

Fig 1